# FASCICULE DE BREVET EUROPEEN

(11) **EP 1 423 941 B1**
(45) Date de publication et mention de la délivrance du brevet: **29.08.2007**
(21) Numéro de dépôt: 02774898.7
(22) Date de dépôt: 03.09.2002
(51) Int. Cl.: H04L 12/46

(54) **DISPOSITIFS DE COMMUNICATION POUVANT DIALOGUER SANS FIL ET PROCEDES D'ASSOCIATION DES DITS DISPOSITIFS**
KOMMUNIKATIONSGERÄTE WELCHE DRAHTLOS MITEINANDER KOMMUNIZIEREN KÖNNEN UND ASSOZIATIONSVERFAHREN FÜR SOLCHE GERÄTE
COMMUNICATION DEVICES CAPABLE OF WIRELESS INTERFACING AND METHODS FOR ASSOCIATING SAID DEVICES

(30) Priorité: 04.09.2001 FR 0111401
(43) Date de publication de la demande: 02.06.2004
(73) Titulaire: Thomson Licensing, 92100 Boulogne-Billancourt (FR)
(72) Inventeur: BÜRKLIN, Helmut, F-35000 Rennes (FR); STRAUB, Gilles, F-35690 Acigné (FR); PERROT, Sébastien, F-35000 Rennes (FR)
(74) Mandataire: Kohrs, Martin
(86) Numéro de dépôt international: PCT/FR2002/002995
(87) Numéro de publication internationale: WO 2003/026223

(56) Documents cités:
- WO-A-01/22661
- US-A- 6 163 703
- ETSI: "Broadband Radio Access Networks (BRAN);HIPERLAN Type 2; Packet based Convergence Layer; Part 4: IEEE 1394 Bridge Specific Functions sub-layer for restricted topology" ETSI TS 101 493-4 V1.1.1, juillet 2001 (2001-07), pages 1-29, XP002194674 cité dans la demande

## Description

La présente invention concerne les réseaux de communication, plus particulièrement les dispositifs pouvant dialoguer sans fil connectés à ces réseaux et les procédés d'association des dits dispositifs.

Il y a actuellement un effort pour définir des standards pour relier des bus de communication en utilisant une technologie de communication sans fil. Des efforts parallèles ont été menés sous le patronage d'une part de l'IEEE (IEEE P1394.1 "Draft Standard for High performance Serial Bus Bridges") et d'autre part, de l'ETSI ("Broadband Radio Access Network (BRAN) ; HIPERLAN Type 2 Technical Specification ; Packet based convergence layer"). Dans ce cadre l'ETSI définit notamment la spécification suivante ("Broadband Radio Access Network (BRAN) ; HIPERLAN Type 2 Technical Specification ; Packet based convergence layer ; Part 4 : IEEE 1394 Bridge Specific Functions sub-layer for restricted topology » ETSI TS 101 493-4 V1.1.1, juillet 2001"). Cela définit les fonctions requises dans un pont sans fil Hiperlan2 pour transférer un trafic de type IEEE1394 entre des équipements de type IEEE1394 au travers du pont.

Par ailleurs le document US-A-6 163 703 (LEE KIL-YOUNG) du 19 décembre 2000 décrit un procédé de couplage entre deux dispositifs sans fil (un téléphone et sa base), où l'échange d'identifiant se fait dans un sens par câble et dans l'autre sens par liaison radio.

La demande de brevet européen EP-A-1 246 400 (Thomson Licencing S.A.) 2 octobre 2002 décrit une méthode pour lier plusieurs bus de communication en utilisant des réseaux de communication sans fil ou réseaux radio. Dans cette demande sont décrits des dispositifs de communication pouvant dialoguer sans fil ou dispositifs-radio appelés "wireless box" (littéralement boite sans fil en anglais) qui assurent la fonction de portail entre un réseau câblé IEEE 1394 et un réseau de communication sans fil Hiperlan 2. L'une des caractéristiques de ces dispositifs est leur fonctionnement par paires. En effet, un dispositif-radio donné ne peut communiquer sans fil qu'avec un unique autre dispositif-radio désigné comme son associé; pour cela, chaque dispositif-radio connaît un identifiant propre à son associé qui lui permet de le distinguer de tous les autres. Dans la demande de brevet européen EP-A-1 246 400 (Thomson Licencing S.A.) 2 octobre 2002, l'identifiant propre à chaque dispositif-radio est une adresse statique appelée EUI-64 stockée de façon permanente en mémoire accessible en lecture par tout autre périphérique requise par le document "IEEE 1394-1995 Standard for a High Performance Serial Bus".

La façon la plus simple de mettre en oeuvre cette association de deux dispositifs-radio est "par construction" pendant la fabrication, chaque dispositif reçoit un numéro d'identification unique (par exemple l'adresse EUI-64). Au même moment, chaque dispositif reçoit le numéro d'identification de son associé (il est conservé dans une mémoire telle qu'une mémoire flash par exemple). Les deux dispositifs-radio vont être capables d'échanger ces numéros en utilisant leurs protocoles de communication sans fil et ainsi pouvoir assurer des communications sans fil exclusivement avec leur associé.

Cette procédure a cependant quelques inconvénients :
- les deux associés ne peuvent jamais être séparés, ils sont inutilisables l'un sans l'autre (le problème se pose, par exemple, lors d'une réparation ou de la destruction de l'un des deux dispositifs);
- si un même utilisateur possède deux paires de dispositifs-radio, alors il doit les marquer chacune de façon différente afin de les différencier lors d'une réinstallation complète du réseau.

Un objet de l'invention est de proposer un dispositif de communication pouvant dialoguer sans fil comprenant :
- des moyens de communication sans fil avec d'autres dispositifs de communication pouvant dialoguer sans fil désignés comme étant ses associés ;
- des moyens pour communiquer avec les dispositifs connectés à un réseau câblé ;
   et caractérisé en ce qu'il comporte :
   - des moyens pour établir une association modifiable avec d'autres dispositifs de communication pouvant dialoguer sans fil.

Dans la suite, on utilisera le terme dispositif-radio déjà explicité précédemment pour désigner de tels dispositifs.

Un autre objet de l'invention est de proposer un procédé d'association modifiable de dispositifs-radio comme décrits ci-dessus, permettant en cas de séparation des dispositifs initialement associés de créer une nouvelle association avec tout autre dispositif de même type que celui décrit précédemment. Ce procédé d'association permet aussi de modifier une association initiale d'un dispositif-radio avec aucun dispositif-radio, cela permet de donner une première association au dispositif. Ce procédé peut dans un premier temps être appliqué à deux dispositifs seulement.

Ainsi, la présente invention concerne un procédé d'association de dispositifs-radio comme décrits ci-dessus, caractérisé en ce que cette association est modifiable par connexion d'au moins deux des dispositifs-radio à associer.

Selon un perfectionnement, le procédé d'association de deux dispositifs-radio est étendu à n dispositifs avec n supérieur ou égal à trois.

Selon un mode de réalisation, de la présente invention, les procédés d'association de deux ou de n dispositifs se font par communication au travers d'un lien physique entre les dispositifs à associer.

Selon une variante du précédent perfectionnement, les n dispositifs à associer doivent être reliés entre eux physiquement, c'est à dire qu'il doit exister entre eux un lien câblé, et ne doivent pouvoir entrer en communication sans fil avec aucun de leur(s) ancien(s) associé(s) (sauf si ceux-ci sont présents sur le bus). Selon une autre variante du perfectionnement précédent, un dispositif radio ne pouvant entrer en communication sans fil avec aucun de ses anciens associés est relié physiquement à un dispositif-radio pouvant ou non entrer en communication sans fil avec ses anciens associés.

L'invention est caractérisée par un procédé selon la revendication 1 et un dispositif selon la revendication 17. D'autres perfectionnements se trouvent dans les revendications dépendantes.

D'autres caractéristiques et avantages de la présente invention apparaîtront à la lecture de la description de différents modes de réalisation, cette description étant faite avec référence aux dessins ci-annexés dans lesquels :
La figure 1a est un schéma illustrant l'association de deux dispositifs-radio.
La figure 1b est un schéma illustrant deux dispositifs-radio associés.
La figure 2 est un organigramme présentant la procédure d'association de deux dispositifs-radio.
La figure 3 est un organigramme présentant la procédure d'association de plusieurs dispositifs-radio en les connectant tous à un même bus.

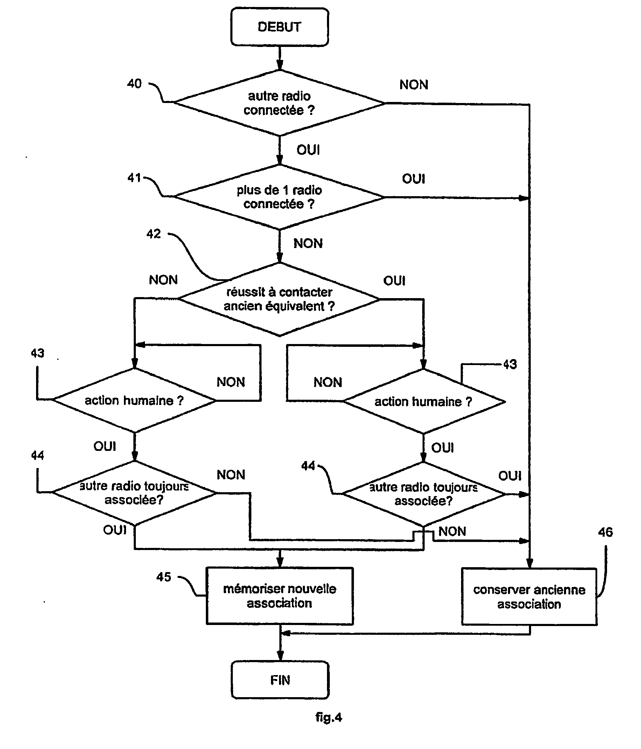

La figure 4 est un organigramme présentant la procédure d'association d'un dispositif-radio à un ensemble de dispositifs radio déjà associés.
Les figures 5a et 5b sont des représentations de plusieurs bus reliés par des ponts radio.
La figure 6 est un schéma général d'un dispositif-radio et de ses différentes parties.
La figure 7 est un schéma bloc d'un dispositif-radio.

Dans la suite de la description, on choisit de relier entre eux les différents dispositifs par un bus série de type IEEE 1394 et par un réseau de communication sans fil de type Hiperlan 2. Les différentes technologies utilisées pour illustrer les modes de réalisation suivants ne sont exclusives, d'autres peuvent être mises en oeuvre. De même, l'adresse EUI-64, l'identifiant unique et permanent utilisée pour distinguer les dispositifs, n'est pas le seul possible. A la place, on peut prendre le numéro de série de la mémoire par exemple.

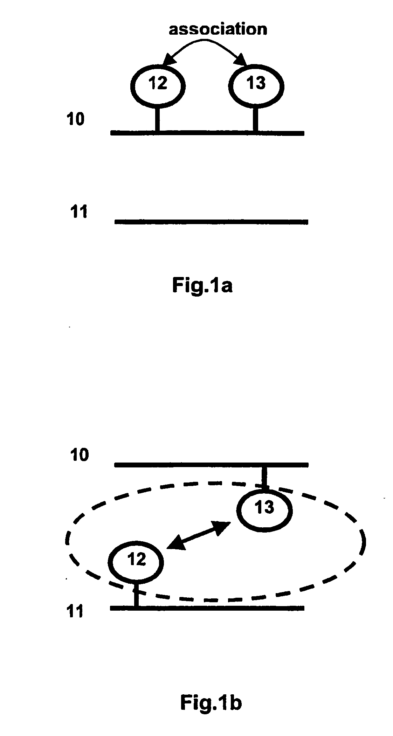

On décrira dans la suite un procédé permettant d'associer deux ou plusieurs dispositifs-radio en les connectant à un bus câblé unique. Il est clair qu'une fois l'association réalisée, les différents dispositifs-radio sauf un sont déconnectés du bus initial pour être connectés à d'autres bus destinés à former un réseau avec le bus initial. Cela est illustré par la figure 1a qui montre l'association de deux dispositifs-radio 12 et 13 connectés à un même bus 10; dans la figure 1b, le dispositif-radio 12 est déconnecté du bus 10 pour être connecté au bus 11 afin de former un réseau constitué de deux bus (10 et 11) reliés par un pont formé par les deux dispositifs-radio 12 et 13.

Pour l'exemple de réalisation, on choisit de prendre comme identifiant de tout dispositif l'adresse EUI-64. Chaque dispositif-radio peut comporter une association d'origine initialisée à la fabrication du dispositif. On choisit par exemple que l'associé d'origine de chaque dispositif-radio est celui dont l'adresse EUI-64 est immédiatement consécutive à la sienne (la dispositif-radio 0 est associé au 1, le 2 au 3 ...) Pour déterminer la valeur de l'associé d'origine, il suffit de faire un OU exclusif entre l'adresse EUI-64 du dispositif radio et le chiffre 1 codé sur 64 bits. Cette association initiale permet à l'utilisateur de pouvoir utiliser immédiatement les dispositifs sans manipulation spéciale. Sinon, on peut laisser l'association initiale vide, c'est-à-dire ne pas attribuer d'associé à un dispositif-radio lors de sa fabrication et indiquer à l'utilisateur qu'il devra réaliser la première association du dispositif lui-même pour utiliser le dispositif-radio. Cependant, le fait que le dispositif possède une association initiale ou une association initiale vide (il n'est pas associé initialement) ne modifie pas la méthode d'association car lorsqu'il va chercher à communiquer avec les périphériques auxquels il devrait être associé, il ne va simplement pas essayer de communiquer. Dans la suite de la description, on verra dans un premier temps le procédé d'association de seulement deux dispositifs. On étudiera dans un second temps deux variantes pour associer un nombre n de dispositifs-radio (n étant un entier supérieur à deux).

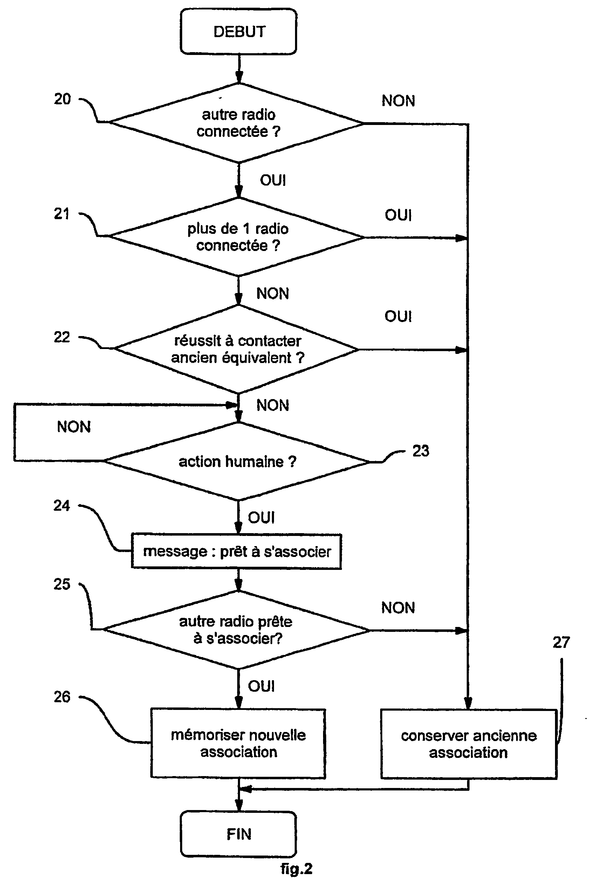

On décrira maintenant avec référence à la figure 2 un mode de réalisation du procédé d'association de deux dispositifs-radio. Les deux dispositifs-radio à associer sont connectés à un même bus 1394. Chaque nouvelle connexion au bus provoque une réinitialisation du bus appelée "bus reset" en anglais comme défini dans le document "IEEE 1394-1995 Standard for a High Performance Serial Bus". On décrit le procédé pour un dispositif-radio donné. Le dispositif-radio considéré explore le bus afin de trouver d'autres dispositifs-radio. On considère par exemple que chaque dispositif possède un registre spécifique permettant d'indiquer aux autres dispositifs s'il s'agit d'un dispositif-radio. S'il n'en trouve pas (20), il conserve son ancienne association (27), qui est soit l'association initiale décrite précédemment, soit l'association qu'il possédait avant le début du procédé, et abandonne le processus d'association. S'il en trouve plus d'une (21), alors il conserve aussi son ancienne association (27) car le procédé décrit dans la figure 2 ne permet d'associer ensemble que deux dispositifs-radio. Eventuellement, s'il trouve un autre dispositif qui n'est pas un dispositif-radio, alors il conserve son ancienne association et abandonne le processus d'association car on peut considérer que pour associer deux dispositifs-radio, il faut les connecter à un bus ne possédant aucune autre connexion, mais ce critère n'est pas obligatoire car la présence d'autres dispositifs non-radio sur le bus n'empêche pas le déroulement du procédé. S'il trouve seulement un autre dispositif-radio, alors il essaie de communiquer sans fil avec son ancien associé (22). S'il y parvient, alors il conserve son ancienne association (27) et abandonne le processus d'association car dans ce cas, il n'y pas lieu de créer une nouvelle association vu que l'ancienne est toujours valide. On entend par association valide le fait que les associés désignés par cette association soient en mesure de communiquer sans fil entre eux au moment où on essaie d'utiliser cette association. En fait, les associés sont tous alimentés et sont suffisamment proches pour être capables de communiquer sans fil. Avant de poursuivre le processus d'association, les dispositifs-radio peuvent attendre une intervention humaine non obligatoire (23). On peut considérer que la création de toute nouvelle association doit être validée par l'administrateur du réseau. On peut par exemple considérer comme intervention humaine, la pression sur un bouton situé sur le dispositif-radio ou tout autre moyen de validation. Cependant, cette intervention humaine n'est pas obligatoire. Si les deux dispositifs-radio ne parviennent pas à atteindre leur ancien associé respectif, alors ils continuent le processus d'association. Au travers du réseau câblé, ils échangent leurs adresses EUI-64 respectives et une indication sur le fait que chacun d'eux a réussi ou non à communiquer avec son ancien associé (24 et 25) donc s'ils sont prêts ou non à continuer le protocole d'association. Si les deux dispositifs-radio indiquent qu'ils sont prêts à continuer le protocole d'association alors chacun inscrit le numéro de l'autre en mémoire (26) (dans une mémoire modifiable, par exemple une mémoire flash non volatile mais modifiable) afin de pouvoir par la suite dialoguer sans contact. Sinon ils interrompent le protocole d'association.

Selon le présent exemple de réalisation décrit ci-dessus, l'utilisation conjointe de dispositifs particuliers et du procédé d'association permet de réaliser une nouvelle association de deux dispositifs-radio. On peut alors modifier l'association d'origine, la remplacer par une nouvelle qui est elle-même modifiable. Cela permet donc de séparer des dispositifs-radio initialement associés, si bien que chaque dispositif-radio est utilisable seul et n'est plus dépendant de son associé initial.

On peut d'autre part considérer que pour pouvoir associer deux dispositifs-radio entre eux, il faut les connecter entre eux sans intermédiaire pour pouvoir réaliser l'association, le fait de connecter entre eux deux appareils créant un réseau câblé. Pour le reste, cette variante met en oeuvre un procédé similaire à celui exposé ci-dessus.

Selon un mode réalisation, le procédé est étendu à n dispositifs avec n supérieur ou égal à trois. Il peut en effet être utile de pouvoir associer plus de deux dispositifs-radio afin de réaliser des liaisons sans fil entre plus de deux bus. Il faut alors modifier le procédé précédemment présenté afin de l'adapter à la possibilité pour un même dispositif de posséder plusieurs associés. Pour ce second exemple, deux variantes sont envisagées. La première consiste à connecter tous les dispositifs-radio à associer à un même bus type IEEE 1394 et à les associer entre eux sous certaines conditions. La deuxième variante consiste en fait à ajouter sous certaines conditions un nouveau dispositif-radio à un ensemble de dispositifs-radio déjà associés entre eux. Dans cette dernière variante, seul le dispositif-radio à ajouter et un des dispositifs-radio de l'ensemble précédent doivent être connectés sur le même bus.

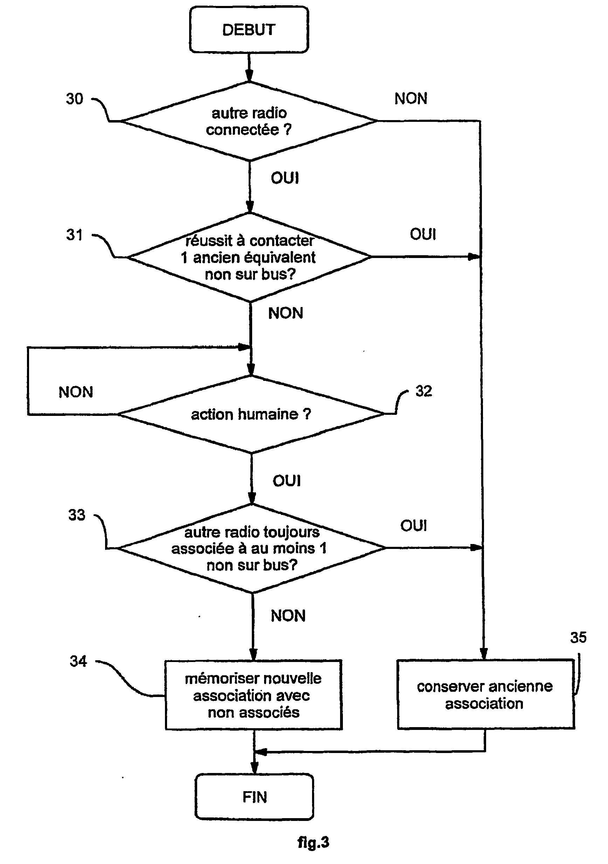

La première variante de l'amélioration consiste, comme le montre la figure 3, à connecter tous les dispositifs-radio à associer à un même bus. Il faut modifier le procédé décrit auparavant pour deux dispositifs-radio afin de l'adapter à un nombre de dispositifs-radio associés supérieur ou égal à trois. La principale condition de réalisation du processus d'association est qu'aucun dispositif-radio à associer ne soit déjà associé avec un autre dispositif-radio non connecté au bus. Cela permet, en les connectant tous à un même bus, d'associer dans un seul et même groupe tous les dispositifs appartenant à plusieurs groupes distincts de dispositifs-radio associés. En fait comme pour l'association de deux dispositifs-radio, suite à une réinitialisation du bus auquel sont connectés tous les dispositifs-radio à associer, chaque dispositif-radio explore le bus. On va considérer la méthode pour l'un d'entre eux. S'il ne trouve pas d'autre dispositif-radio sur le réseau câblé (30), il conserve son ancienne association (35) et abandonne le processus d'association. Optionnellement, s'il trouve un autre dispositif qui n'est pas un dispositif-radio, alors il conserve son ancienne association et abandonne le processus d'association. S'il trouve d'autres dispositifs-radio sur le bus, alors il essaie de communiquer sans fil avec ses anciens associés sauf ceux se trouvant déjà sur le bus (31). S'il y parvient, alors il conserve ses anciennes associations et abandonne le processus d'association. Avant de poursuivre l'association, les dispositifs-radio peuvent attendre une intervention humaine (32) non obligatoire. S'il ne parvient à entrer en contact avec aucun de ses anciens associés, alors il engage le protocole d'association. Au travers du réseau câblé, il demande leurs adresses EUI-64 aux dispositifs-radio connectés et une réponse indiquant pour chaque autre dispositif-radio si ce dispositif-radio a réussi à communiquer avec un au moins de ses anciens associés. Le dispositif-radio considéré reçoit l'ensemble des réponses (33) et s'associe à chaque dispositif-radio ayant envoyé une réponse indiquant qu'il n'a pas réussi, en inscrivant dans une mémoire modifiable leurs adresses EUI-64 (34).

Cette première variante de l'extension de la présente invention à plus de deux dispositifs permet donc d'associer entre eux plusieurs dispositifs-radio en les connectant tous à un même bus. Cela permet ensuite de réaliser des ponts entre plusieurs bus par l'intermédiaire des portails que sont ces dispositifs-radio. Cette association est simple et permet d'associer simultanément un grand nombre de dispositifs-radio. Pour réaliser cette association, il faut cependant pouvoir connecter tous les dispositifs-radio à associer sur un même bus, ce qui n'est pas toujours possible. En effet, des dispositifs-radio en cours d'utilisation ne doivent pas être déconnectés de leur bus. D'autre part, il faut disposer de dispositifs-radio qui ne possèdent pas d'associations valides autres que celles existant avec des dispositifs-radio connectés au bus, c'est-à-dire qu'ils ne peuvent communiquer sans contact avec aucun de leurs associés non situés sur le bus.

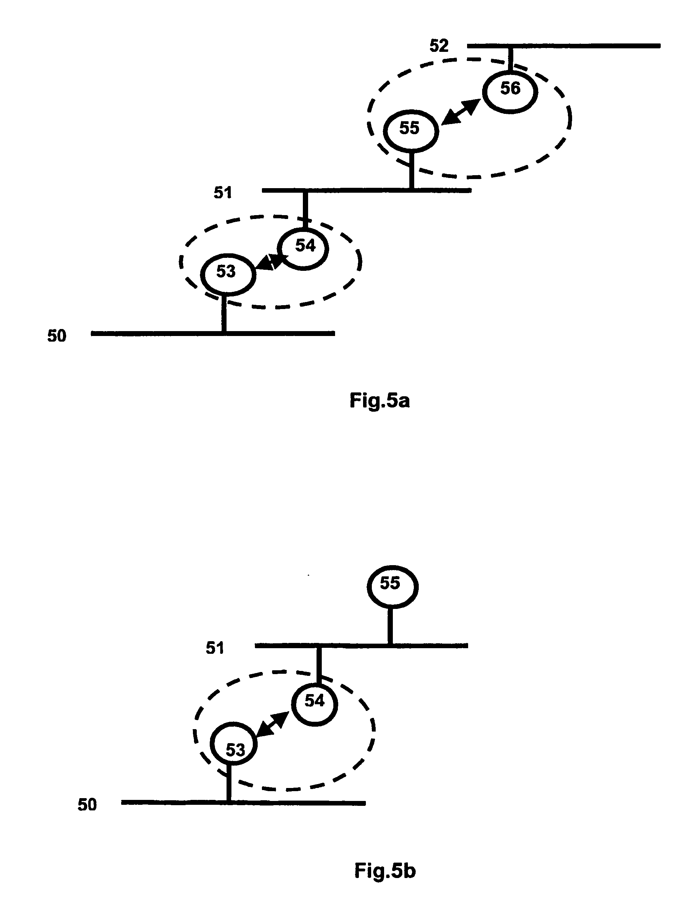

La seconde variante permet ainsi d'ajouter sous certaines conditions un nouveau dispositif-radio à un ensemble de dispositifs-radio déjà associés entre eux. Le dispositif-radio à ajouter et un des dispositifs-radio de l'ensemble précédent sont à connecter sur un même bus, qui peut être le bus auquel était déjà connecté le dispositif-radio déjà associé à un ensemble de dispositifs-radio. L'ajout d'un nouveau dispositif-radio sur le bus provoque la réinitialisation du bus (bus reset) et donc la procédure d'exploration du bus par les dispositifs qui y sont connectés. On considère le procédé d'exploration pour l'un quelconque des dispositifs-radio. S'il ne trouve pas d'autre dispositif-radio connecté au bus (40), il conserve son ancienne association (46) et abandonne le processus d'association. S'il en trouve plus d'un (41), alors il conserve aussi son ancienne association. S'il trouve seulement un seul autre dispositif-radio, alors il essaie de communiquer sans fil avec ses anciens associés (42). S'il y parvient, alors il continue le protocole d'association mais mémorise en interne le fait qu'il ait réussi à communiquer sans fil avec au moins un de ses anciens associé. Pour commencer le protocole d'association, les dispositifs-radio attendent une action humaine (43) qui est dans ce cas obligatoire. L'intervention humaine est ici obligatoire car on peut en effet imaginer, comme sur la figure 5a que deux dispositifs-radio (54 et 55) sont connectés à un même bus (51) ce qui permet de relier ce bus à deux autres bus (50 et 52) par l'intermédiaire de deux ponts radio formés par les associations 53-54 et 55-56. Si on supprime le bus 52 comme sur la figure 5b, il ne faut pas que les deux dispositifs-radio 54 et 55 s'associent car sinon ils formeraient une boucle. L'intervention humaine est donc obligatoire dans ce cas. Si toutes les conditions précédentes sont remplies et que l'association a été validée par une intervention humaine, alors les deux dispositifs-radio connectés au bus commencent le protocole d'association par l'intermédiaire du bus: si les deux dispositifs-radio possèdent encore au moins une association valide (44), alors ils conservent tous deux leurs anciennes associations. Si au moins un des deux dispositifs-radio ne possède pas d'association valide (44), alors celui-ci s'associe (45) avec l'autre dispositif-radio et avec tous ses associés et réciproquement.

Cette deuxième variante permet donc d'associer un dispositif-radio à un ensemble de dispositifs-radio déjà existant et cette méthode permet de ne pas avoir à déconnecter tous les dispositifs-radio utilisés pour les connecter à un même bus. Il suffit de connecter le dispositif-radio à ajouter sur un des bus comportant un autre dispositif-radio pour pouvoir l'associer à l'ensemble de dispositifs-radio déjà présents.

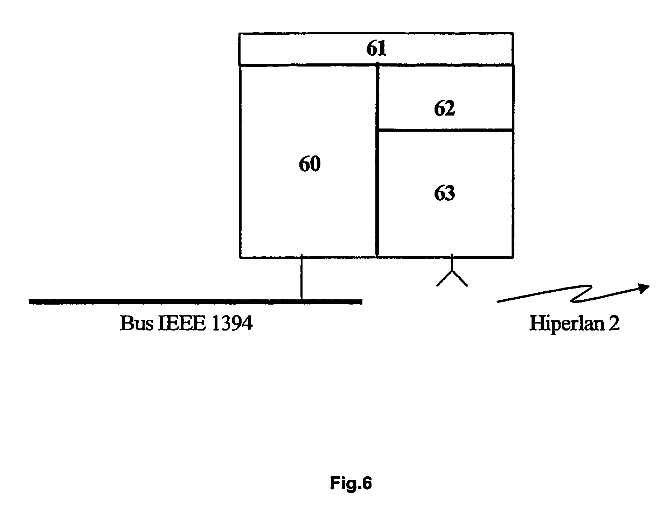

La figure 6 présente l'organisation logicielle générale d'un dispositif radio. Il comporte une partie 60 similaire à celle de tous les dispositifs pouvant être connectés à un bus 1394, une couche 61 comportant les différentes applications, notamment celles gérant le procédé d'association, une couche de convergence 62 entre les réseaux 1394 et Hiperlan 2 et enfin une couche 63 spécifique aux communications par l'intermédiaire d'Hiperlan 2.

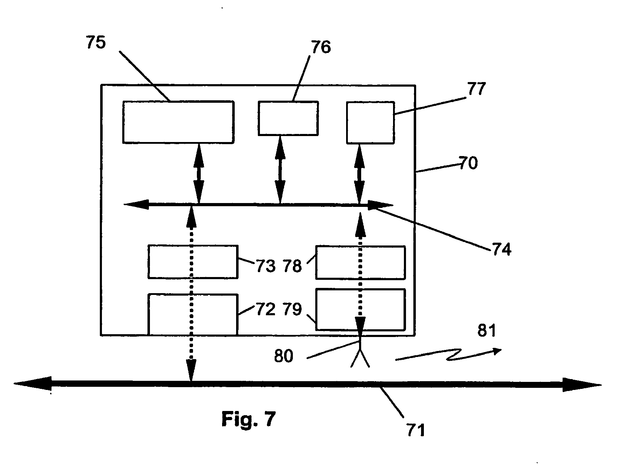

La figure 7 est un diagramme bloc d'un dispositif-radio 70. Le dispositif-radio 70 est connecté au bus série 1394 portant la référence 71 à travers une interface physique 72 et un circuit de liaison 73. Ce dernier est relié au bus parallèle interne 74 du dispositif-radio 70. Un microprocesseur 75 assure la gestion du dispositif-radio, qui comporte également un circuit de gestion des entrées/sorties 76, ainsi qu'une mémoire 77. Ces trois derniers éléments sont également reliés au bus parallèle 74. Le dispositif-radio 70 comporte aussi un autre circuit de liaison 78 et une interface physique 79 lui permettant d'être connecté au réseau Hiperlan 2 (81) par l'intermédiaire d'une antenne 80.

Typiquement le microprocesseur prend en charge la mise en oeuvre du procédé d'association, c'est à dire les étapes d'exploration du réseau et les étapes de communication au travers des réseaux câblés 70 et radio Hiperlan 2. Les informations sur les dispositifs-radio présents après une réinitialisation sont mémorisées par exemple dans la mémoire réinscriptible 77.

Il est bien entendu que des modifications peuvent être apportées au procédé pour sa mise en oeuvre, sans qu'elles sortent pour autant du cadre de la présente invention, tel qu'il est défini par les revendications.

## Revendications

1. - Procédé d'association de dispositifs de communication pouvant dialoguer sans fil comportant chacun des moyens de connexion à un réseau câblé et des moyens de transmission sans fil, l'association étant réalisée pour la reconnaissance mutuelle ultérieure des dispositifs de communication pouvant dialoguer sans fil associés pour la mise en oeuvre d'une communication sans fil exclusive aux dispositifs associés, une association d'un dispositif donné étant modifiable par connexion à un réseau câblé unique de ce dispositif et d'au moins un autre dispositif de communication pouvant dialoguer sans fil à associer, procédé dans lequel chaque dispositif de communication pouvant dialoguer sans fil connecté au réseau effectue une étape de mémorisation de manière modifiable des identifiants des nouveaux associés (26; 34; 45) ;
**caractérisé en ce que** chaque dispositif de communication pouvant dialoguer sans fil connecté au réseau effectue les étapes suivantes :
- avant l'étape de mémorisation, une étape de vérification de la présence sur le réseau câblé d'autres dispositifs de communication pouvant dialoguer sans fil (20, 21; 30; 40,41) ;
- après l'étape de mémorisation, une étape d'établissement d'une association modifiable avec les autres dispositifs de communication pouvant dialoguer sans fil.

2. - Procédé selon la revendication 1, **caractérisé en ce que** l'étape de vérification est effectuée lors d'une connexion d'un dispositif au réseau câblé.

3. - Procédé selon la revendication 2, **caractérisé en ce que** le dispositif considéré ne peut avoir qu'un associé à la fois.

4. - Procédé selon la revendication 3, **caractérisé en ce que** le procédé d'association est abandonné si, lors de l'étape de vérification (21), le dispositif considéré constate que plus d'un autre dispositif de communication pouvant dialoguer sans fil sont connecté au réseau câblé.

5. - Procédé selon la revendication 4, **caractérisé en ce qu'**il comporte une étape de tentative de communication sans fil (22) avec son ancien associé qui permet d'abandonner le procédé si, durant cette étape, le dispositif considéré parvient à communiquer sans fil avec son ancien associé n'étant pas relié à lui physiquement.

6. - Procédé selon la revendication 2, **caractérisé en ce que** le dispositif considéré possède une pluralité d'associés à la fois.

7. - Procédé selon la revendication 6, **caractérisé en ce qu'**il comporte une étape de tentative de communication sans fil avec ses anciens associés qui permet d'abandonner le procédé si, durant cette étape (31), le dispositif considéré parvient à communiquer sans fil avec au moins un ancien associé n'étant pas relié à lui physiquement.

8. - Procédé selon l'une quelconque des revendications 2 à 7 **caractérisé en ce que** le procédé d'association est abandonné si, lors de l'étape de vérification (20, 21; 30), le dispositif considéré constate que d'autres appareils, différents d'un dispositif de communication pouvant dialoguer sans fil sont connectés au réseau câblé.

9. - Procédé selon la revendication 6, **caractérisé en ce qu'**il comporte une étape de création d'un lien physique entre un dispositif donné et un seul autre des dispositifs avec lesquels il peut s'associer, ce qui entraîne une phase de configuration ou de reconfiguration du réseau câblé respectivement créé ou modifié.

10. - Procédé selon la revendication 9, **caractérisé en ce que** le procédé d'association est abandonné si, lors de l'étape de vérification (41), le dispositif considéré constate que plus de un autre dispositif de communication pouvant dialoguer sans fil sont connecté au réseau câblé.

11. - Procédé selon la revendication 10, **caractérisé en ce que** un seul des dispositifs pouvant dialoguer sans contact connecté au réseau doit pouvoir réussir à communiquer sans contact avec ses anciens associés (42, 44).

12. - Procédé selon la revendication 11, **caractérisé en ce que** lors de la phase de mémorisation, chaque dispositif est associé non seulement avec l'autre dispositif présent sur le réseau mais aussi avec tous ses associés (45).

13. - Procédé selon l'une quelconque des revendications 1 à 12 **caractérisé en ce qu'**il comporte une étape de validation par l'utilisateur de l'association à réaliser par le procédé.

14. - Procédé selon l'une quelconque des revendications 1 à 13 **caractérisé en ce que** le réseau câblé utilisé est du type IEEE1394 (71).

15. - Procédé selon l'une quelconque des revendications 1 à 13 **caractérisé en ce que** l'identifiant unique et permanent d'un dispositif est l'adresse EUI-64.

16. - Procédé selon l'une quelconque des revendications 1 à 13 **caractérisé en ce que** le réseau de communication sans-fil est de type Hiperlan 2 (81).

17. - Dispositif de communication pouvant dialoguer sans fil comprenant:
- des moyens de communication sans fil (78, 79, 80) avec d'autres dispositifs de communication pouvant dialoguer sans fil désignés comme étant ses associés ;
- des moyens de connexion à un réseau câblé;
- des moyens (72, .73) pour communiquer avec les dispositifs connectés à un réseau câblé ;
- des moyens (77) pour mémoriser les identifiants des dispositifs de communication pouvant dialoguer sans fil ;
et **caractérisé en ce qu'**il comporte :
- des moyens (60, 61) pour détecter, sur le réseau câblé, des dispositifs de communication pouvant dialoguer sans fil ;
- des moyens (74, 75, 76, 77) pour établir une association modifiable avec d'autres dispositifs de communication pouvant dialoguer sans fil.

## Claims

1. -A method of associating communication devices capable of wireless communication each comprising means of connection to a wired network and means of wireless transmission, the association being achieved for the subsequent mutual recognition of the associated wireless communication devices for the implementation of a wireless communication exclusive to the associated devices, an association of a given device being modifiable by connection to a unique wired network of this device and of at least one other wireless communication device to be associated, method wherein each wireless communication device connected to the network performs a step of memorizing in modifiable manner the identifiers of the new associates (26; 34; 45);
**characterized in that** each wireless communication device connected to the network performs the following steps:
- prior to the step of memorizing, a step of verifying the presence on the wired network of other communication devices capable of wireless dialog (20, 21; 30; 40, 41);
- after the step of memorizing, a step of establishing a modifiable association with the other wireless communication devices.

2. -The method as claimed in Claim 1, **characterized in that**, at the step of verifying is performed at the time of a connection of a device to the wired network.

3. - The method as claimed in Claim 2, **characterized in that** the device in question can have only one associate at a time.

4. - The method as claimed in Claim 3, **characterized in that** the association method is abandoned if, at the time of the verification step (21), the device in question ascertains that more than one other communication device capable of wireless dialog are connected to the wired network.

5. - The method as claimed in Claim 4, **characterized in that** it comprises a step of attempted wireless communication (22) with its former associate which is used to abandon the method if, during this step, the device in question achieves wireless communication with its former associate not being linked to it physically.

6. -The method as claimed in Claim 2, **characterized in that** the device in question has a plurality of associates at a time.

7. -The method as claimed in Claim 6, **characterized in that** it comprises a step of attempted wireless communication with its former associates which is used to abandon the method if, during this step (31), the device in question achieves wireless communication with at least one former associate not being linked to it physically.

8. -The method as claimed in any one of Claims 2 to 7, **characterized in that** the association method is abandoned if, at the time of the verification step (20, 21; 30), the device in question ascertains that other units, different from a communication device capable of wireless dialog, are connected to the wired network.

9. -The method as claimed in Claim 6, **characterized in that** it comprises a step of creating a physical link between a given device and only one other of the devices with which it can associate, which causes a phase of configuration or of reconfiguration of the wired network respectively created or modified.

10. - The method as claimed in Claim 9, **characterized in that** the association method is abandoned if, at the time of the verification step (41), the device in question ascertains that more than one other communication device capable of wireless dialog are connected to the wired network.

11. -The method as claimed in Claim 10, **characterized in that** only one of the devices capable of dialog without contact connected to the network must be able to succeed in communicating without contact with its former associates (42, 44).

12. -The method as claimed in Claim 11, **characterized in that**, during the memorization phase, each device is associated not only with the other device present on the network but also with all its associates (45).

13. -The method as claimed in any one of Claims 1 to 12, **characterized in that** it comprises a step of validation by the user of the association to be achieved by the method.

14. -The method as claimed in any one of Claims 1 to 13, **characterized in that** the wired network used is of the IEEE1394 type (71).

15. - The method as claimed in any one of Claims 1 to 13, **characterized in that** the unique and permanent identifier of a device is the EUI-64 address.

16. - The method as claimed in any one of Claims 1 to 13, **characterized in that** the wireless communication network is of the Hiperlan 2 type (81).

17. - A communication device capable of wireless dialog comprising:
- means of wireless communication (78, 79, 80) with other communication devices capable of wireless dialog designated as being its associates;
- means for connecting to a wired network;
- means (72, 73) for communicating with the devices connected to a wired network;
- means (77) for memorizing the identifiers of the wireless communication devices;
and **characterized in that** it comprises:
- means (60, 61) for detecting, on the wired network, wireless communication devices;
- means (74, 75, 76, 77) for establishing a modifiable association with other communication devices capable of wireless dialog.

## Patentansprüche

1. Verfahren zum Zuordnen von zur drahtlosen Kommunikation fähigen Kommunikationsvorrichtungen, die jeweils Mittel zum Anschließen an ein kabelgestütztes Netzwerk und Mittel für eine drahtlose Übertragung aufweisen, wobei die Zuordnung bewerkstelligt wird, damit sich die einander zugeordneten, zur drahtlosen Kommunikation fähigen Kommunikationsvorrichtungen später gegenseitig erkennen können, um eine für die einander zugeordneten Vorrichtungen ausschließliche drahtlose Kommunikation einzusetzen, wobei eine Zuordnung einer vorgegebenen Vorrichtung dadurch veränderbar ist, dass diese Vorrichtung und mindestens eine andere zuzuordnende, zur drahtlosen Kommunikation fähige Kommunikationsvorrichtung an ein einziges kabelgestütztes Netzwerk angeschlossen werden, wobei jede an das Netzwerk angeschlossene, zur drahtlosen Kommunikation fähige Kommunikationsvorrichtung durchführt:
einen Schritt der veränderbaren Speicherung der Kennungen der neuen zugeordneten Vorrichtungen (26; 34; 45); **dadurch gekennzeichnet, dass** jede, an das Netzwerk angeschlossene, zur drahtlosen Kommunikation fähige Kommunikationsvorrichtung die folgenden Schritte durchführt:
- Vor dem Schritt der veränderbaren Speicherung einen Schritt der Prüfung, ob in dem kabelgestützten Netzwerk weitere, zur drahtlosen Kommunikation fähige Kommunikationsvorrichtungen vorhanden sind (20, 21; 30; 40, 41);
- Nach dem Schritt der veränderbaren Speicherung einen Schritt der Herstellung einer veränderbaren Zuordnung zu den weiteren, zur drahtlosen Kommunikation fähigen Kommunikationsvorrichtungen.

2. Verfahren nach Anspruch 1, **dadurch gekennzeichnet, dass** der Schritt der Prüfung bei einem Anschließen einer Vorrichtung an das kabelgestützte Netzwerk durchgeführt wird.

3. Verfahren nach Anspruch 2, **dadurch gekennzeichnet, dass** die betreffende Vorrichtung gleichzeitig nur eine zugeordnete Vorrichtung haben kann.

4. Verfahren nach Anspruch 3, **dadurch gekennzeichnet, dass** das Zuordnungsverfahren verlassen wird, wenn bei dem Schritt der Prüfung (21) die betreffende Vorrichtung feststellt, dass mehr als eine weitere, zur drahtlosen Kommunikation fähige Kommunikationsvorrichtung an das kabelgestützte Netzwerk angeschlossen sind.

5. Verfahren nach Anspruch 4, **dadurch gekennzeichnet, dass** es einen Schritt eines Versuchs einer drahtlosen Kommunikation (22) mit der früher ihr zugeordneten Vorrichtung umfasst, der das Verlassen des Verfahrens ermöglicht, wenn es während dieses Schritts der betreffenden Vorrichtung gelingt, mit der früher ihr zugeordneten Vorrichtung drahtlos zu kommunizieren, die physikalisch nicht mit ihr verbunden ist.

6. Verfahren nach Anspruch 2, **dadurch gekennzeichnet, dass** die betreffende Vorrichtung eine Mehrzahl von zugeordneten Vorrichtungen gleichzeitig aufweist.

7. Verfahren nach Anspruch 6, **dadurch gekennzeichnet, dass** es einen Schritt eines Versuchs einer drahtlosen Kommunikation mit den früher ihr zugeordneten Vorrichtungen umfasst, der das Verlassen des Verfahrens ermöglicht, wenn es während dieses Schritts (31) der betreffenden Vorrichtung gelingt, mit mindestens einer früher zugeordneten Vorrichtung drahtlos zu kommunizieren, die physikalisch nicht mit ihr verbunden ist.

8. Verfahren nach einem der Ansprüche 2 bis 7, **dadurch gekennzeichnet, dass** das Zuordnungsverfahren verlassen wird, wenn bei dem Schritt der Prüfung (20, 21; 30) die betreffende Vorrichtung feststellt, dass weitere Geräte, die sich von einer zur drahtlosen Kommunikation fähigen Kommunikationsvorrichtung unterscheiden, an das kabelgestützte Netzwerk angeschlossen sind.

9. Verfahren nach Anspruch 6, **dadurch gekennzeichnet, dass** es einen Schritt der Herstellung einer physikalischen Verbindung zwischen einer vorgegebenen Vorrichtung und einer einzigen weiteren der Vorrichtungen, denen sie zugeordnet werden kann, aufweist, wodurch sich eine Phase der Konfiguration oder der Rekonfiguration des erstellten beziehungsweise geänderten kabelgestützten Netzwerks ergibt.

10. Verfahren nach Anspruch 9, **dadurch gekennzeichnet, dass** das Zuordnungsverfahren verlassen wird, wenn bei dem schritt der Prüfung (41) die betreffende Vorrichtung feststellt, dass mehr als eine weitere, zur drahtlosen Kommunikation fähige Kommunikationsvorrichtung an das kabelgestützte Netzwerk angeschlossen sind.

11. Verfahren nach Anspruch 9, **dadurch gekennzeichnet, dass** es einer einzigen der zur kontaktlosen Kommunikation fähigen Vorrichtungen, die an das Netzwerk angeschlossen ist, gelingen muss, kontaktlos mit den früher ihr zugeordneten Vorrichtungen (42, 44) zu kommunizieren.

12. Verfahren nach Anspruch 11, **dadurch gekennzeichnet, dass** in der Speicherungsphase jede Vorrichtung nicht nur der weiteren, im Netzwerk vorhandenen Vorrichtung, sondern auch allen ihr zugeordneten Vorrichtungen (45) zugeordnet ist.

13. Verfahren nach einem der Ansprüche 1 bis 12, **dadurch gekennzeichnet, dass** es einen Schritt der Validierung der von dem Verfahren herzustellenden Zuordnung durch den Benutzer aufweist.

14. Verfahren nach einem der Ansprüche 1 bis 13, **dadurch gekennzeichnet, dass** das verwendete kabelgestützte Netzwerk ein Netzwerk des Typs IEEE 1394 (71) ist.

15. Verfahren nach einem der Ansprüche 1 bis 13, **dadurch gekennzeichnet, dass** die eindeutige und dauerhafte Kennung einer Vorrichtung die Adresse EUI-64 ist.

16. Verfahren nach einem der Ansprüche 1 bis 13, **dadurch gekennzeichnet, dass** das drahtlose Kommunikationsnetzwerk ein Netzwerk des Typs HiperLAN/2 (81) ist.

17. Zur drahtlosen Kommunikation fähige Kommunikationsvorrichtung mit:
- Mitteln zur drahtlosen Kommunikation (78 79, 80) mit weiteren zur drahtlosen Kommunikation fähigen Kommunikationsvorrichtungen, die als die ihr zugeordneten Vorrichtungen bestimmt sind;
- Mitteln zum Anschließen an ein kabelgestütztes Netzwerk;
- Mitteln (72, 73) zum Kommunizieren mit den an ein kabelgestütztes Netzwerk angeschlossenen Vorrichtungen;
- Mitteln (77) zur Speicherung der Kennungen der zur drahtlosen Kommunikation fähigen Kommunikationsvorrichtungen,
**dadurch gekennzeichnet, dass** sie Folgendes aufweist:
- Mittel (60, 61), um in dem kabelgestützten Netzwerk zur drahtlosen Kommunikation fähige Kommunikationsvorrichtungen zu ermitteln;
- Mittel (74, 75, 76, 77) zur Herstellung einer veränderbaren Zuordnung zu weiteren zur drahtlosen Kommunikation fähigen Kommunikationsvorrichtungen.
